**Europäisches Patentamt**

(19) **European Patent Office**

**Office européen des brevets**

(11) Veröffentlichungsnummer: **0 185 351**

**A2**

(12) # EUROPÄISCHE PATENTANMELDUNG

(21) Anmeldenummer: **85116078.8**

(51) Int. Cl.⁴: **G 01 N 23/20**

(22) Anmeldetag: **17.12.85**

(30) Priorität: **20.12.84 LU 85701**

(43) Veröffentlichungstag der Anmeldung:
**25.06.86 Patentblatt 86/26**

(84) Benannte Vertragsstaaten:
**DE FR GB**

(71) Anmelder: **EUROPÄISCHE ATOMGEMEINSCHAFT (EURATOM)**
**Bâtiment Jean Monnet Plateau du Kirchberg Boîte Postale 1907**
**L-1019 Luxembourg(LU)**

(72) Erfinder: **Tambuyser, Paul**
**Bovenweg 23**
**NL-1871 VN Schoorl(NL)**

(72) Erfinder: **Schipper, Adrianus**
**Talingstraat 7**
**NL-1873 HW Groet(NL)**

(74) Vertreter: **Weinmiller, Jürgen**
**Zeppelinstrasse 63**
**D-8000 München 80(DE)**

(54) **Probenhalter für eine Materialprobe, insbesondere für Röntgen-Diffraktionsmessungen.**

(57) Die Erfindung bezieht sich auf einen Probenhalter für Materialproben mit einer ebenen Testfläche und dazu senkrechten Seitenflächen, insbesondere für Röntgen-Diffraktionsmessungen. Erfindungsgemäß besteht der Probenhalter aus einem Träger (1) mit Z-förmigem Querschnitt, durch den einerseits eine Referenzebene (2) für die ebene Testfläche der Materialprobe (5) und andererseits eine Montageebene (3) für drei Haltezylinder (6, 7, 8) aus Glas gebildet wird. Zwei dieser Zylinder sind ortsfest montiert, während der dritte federbelastet in einem Schlitz (10) verschiebbar ist, wobei die Federkraft an einer Schraubhülse (13) einstellbar ist.

EP 0 185 351 A2

## PROBENHALTER FÜR EINE MATERIALPROBE, INSBESONDERE FÜR RÖNTGEN-DIFFRAKTIONSMESSUNGEN

Die Erfindung bezieht sich auf einen Probenhalter für eine Materialprobe mit einer ebenen Testfläche und dazu senkrechten Seitenflächen, insbesondere für Röntgen-Diffraktionsmessungen.

Materialproben, die bei hohen Temperaturen einer Kohlenstoff, Schwefel oder Sauerstoff enthaltenden Atmosphäre ausgesetzt sind, bilden dünne Schichten eines Korrosionsprodukts auf der Oberfläche, die meist sehr spröde sind und zum Abplatzen neigen. Bisher wurden die Korrosionsprodukte zur Analyse in Pulverform überführt und dann durch Röntgen-Diffraktionsmessungen bestimmt. Dabei wird aber die erzielte Oberflächenstruktur zerstört. Es wäre wesentlich günstiger, wenn man die Röntgen-Diffraktionsmessungen an der Materialprobe selbst durchführen könnte. Dazu bedarf es jedoch eines Probenhalters, der eine Vielzahl von Forderungen erfüllen müßte: Zum einen müßte die Haltekraft einstellbar sein, damit die meist sehr spröden Materialproben bzw. die zu untersuchenden Oberflächen nicht verletzt werden. Weiter müßte der Probenhalter an unterschiedliche Geometrien von Materialproben ohne weiteres angepaßt werden können. Insbesondere dürften sich Geometrieänderungen der Materialproben bei der Wärmebehandlung nicht störend auswirken. Die wichtigste Forderung betrifft aber die korrekte Lage der Meßfläche der Materialprobe bezüglich des Probenhalters und damit bezüglich des Diffraktometers. Diese für spröde Materialproben mit nicht genau definierter Geometrie typischen Erfordernisse müssen erfüllt werden, ohne daß in die Nähe der Meßfläche der Materialprobe oder gar diese übergreifend ein metallisches Halteglied gelangt, da dieses die Messung verfälschen würde.

Die Aufgabe der vorliegenden Erfindung ist es, einen Probenhalter für derartige Materialproben anzugeben, der die genannten Forderungen erfüllt und zugleich in der Herstellung preiswert und in der Bedienung einfach ist.

Diese Aufgabe wird bei einem Probenhalter für eine Materialprobe mit einer ebenen Testfläche und dazu senkrechten Seitenflächen, insbesondere für Röntgen-Diffraktionsmessungen, erfindungsgemäß dadurch gelöst, daß ein Träger mit im wesentlichen Z-förmigem Querschnitt, d.h. mit zwei zueinander parallelen und durch ein dazu i.w. senkrecht verlaufendes Zwischenstück verbundenen Ebenen vorgesehen ist, von denen die erste Ebene die Referenzebene für die ebene Testfläche der Materialprobe bildet, während auf der zweiten Ebene drei Haltezylinder für die Materialprobe senkrecht zu dieser Ebene und zueinander im Dreieck angeordnet sind, daß zwei dieser Haltezylinder fest montiert sind, während der dritte in einem Schlitz im Träger verschiebbar ist, wobei eine Feder diesen Zylinder in die den beiden ortsfesten Zylindern nächstliegende Stellung zu drücken versucht.

Vorzugsweise ist der dritte Haltezylinder in einer Führungsstange befestigt, die in einem parallel zur zweiten Ebene durch den Träger verlaufenden Kanal gleitend angeordnet ist, während die Feder ebenfalls in diesem Kanal liegt und sich einerseits an einer Schulter der Stange in der Nähe des Zylinders und andererseits an einer Schraubhülse abstützt, die mit einem Gewinde an der Mündung des Kanals zusammenwirkt.

Um die Messung nicht zu verfälschen, sind vorzugsweise alle drei Zylinder aus Glas, da nur sie sich in der Nähe der Testfläche der Materialprobe befinden.

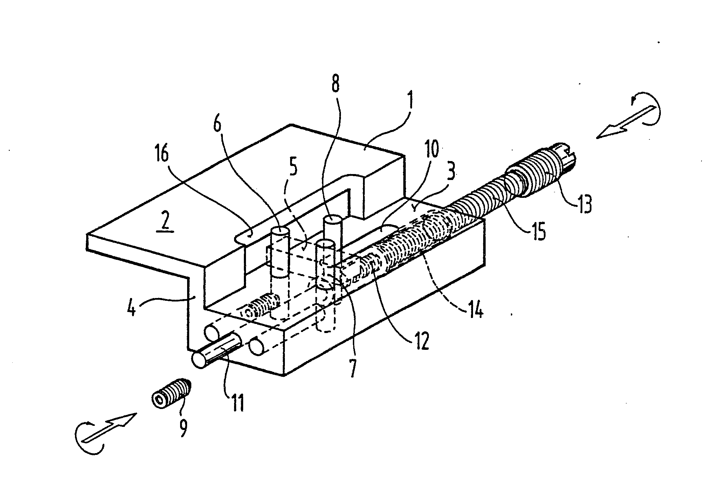

Nachfolgend wird die Erfindung anhand eines bevorzugten Ausführungsbeispiels mithilfe der einzigen Zeichnung näher erläutert, die einen erfindungsgemäßen Probenhalter in Perspektive und im teilweise zusammengebauten Zustand zeigt.

Der in der Figur dargestellte erfindungsgemäße Probenhalter besitzt einen metallischen Träger 1, insbesondere aus Aluminium oder einer Aluminiumlegierung mit im wesentlichen Z-förmigem Querschnitt, d.h. mit zwei zueinander parallelen Ebenen 2 und 3 und einem dazu senkrecht verlaufenden Zwischenstück 4. Die erste dieser Ebenen 2 bildet die Referenzebene für die ebene Testfläche einer Materialprobe 5, die in der Figur gestrichelt eingezeichnet ist und zwischen drei Haltezylindern 6, 7 und 8 eingespannt ist. Zwei dieser Haltezylinder 6 und 7 sind ortsfest auf dem Träger befestigt, indem sie in Paßlöchern stecken, die senkrecht zur Ebene 3 in den Träger 1 gebohrt sind und dort durch Madenschrauben, z.B. 9, festgehalten werden, die senkrecht zur Achse der Zylinder in Gewindelöcher des Trägers eingeschraubt sind.

Der dritte Haltezylinder 8 ist in einem Schlitz 10 verschiebbar montiert, und zwar auf einer Führungsstange 11, die in einem parallel zur Ebene 3 durch den Träger 1 verlaufenden Kanal gleitend montiert ist. Der Haltezylinder 8 sitzt in einem senkrecht zur Achse der Führungsstange durch diese verlaufenden Loch und ist dort mithilfe einer weiteren Madenschraube 12 fixiert, die in ein erweitertes Stirnstück der Führungsstange axial zu dieser eingeschraubt ist.

Über diese Madenschraube 12 ist eine Spiralfeder 15 gestülpt, die sich auf diesem erweiterten Stirnstück der Führungsstange abstützt und mit ihrem anderen Ende in eine Schraubhülse 13 paßt, die mit einem Schraubgewinde 14 an einem Ende des die Führungsstange aufnehmenden Kanals zusammenwirkt.

Im fertig montierten Probenhalter sind die beiden ortsfesten Haltezylinder 6 und 7 durch die Madenschrauben 9 festgelegt, während der dritte Haltezylinder 8 durch die Feder und die in das Gewinde 14 eingeschraubte Schraubhülse 13 in die Endstellung gedrückt wird, die den beiden ortsfesten Haltezylindern am nächsten liegt. Die Lage der Schraubhülse 13 bestimmt den Anpreßdruck des Haltezylinders 8 für eine gegebene Materialprobe. Dieser Anpreßdruck kann durch Verschieben der Schraubhülse 13 leicht geändert werden. Soll nun eine Materialprobe in den Probenhalter eingesetzt werden, dann wird die Materialprobe zuerst auf eine glatte Fläche, z.B. eine Glasfläche, gelegt, und zwar mit ihrer Testfläche nach unten. Dann wird der Probenhalter so über die Materialprobe gehalten, daß die freien Enden der Haltezylinder von oben über die Materialprobe gelangen. Dabei wird von Hand oder mithilfe eines geeigneten einfachen Werkzeugs der dritte Haltezylinder 8 gegen die Kraft der Feder im Schlitz 10 zurückgeschoben, bis der Probenhalter mit seiner Referenzebene 2 voll auf der Glasfläche aufliegen kann, wobei die Stirnseiten der Haltezylinder 6, 7 und 8, die ebenfalls in dieser Ebene liegen, die Materialprobe umgreifend ebenfalls mit der Glasfläche in Berührung kommen. Nun genügt es, den beweglichen Haltezylinder 8 langsam und vorsichtig loszulassen, um die Materialprobe zu ergreifen. Sie befindet sich nun mit ihrer Testfläche koplanar zur Referenzebene 2 und wird mit dem vorher an der Schraubhülse eingestellten Anpreßdruck gehalten. In unmittelbarer Nähe der Testfläche befinden sich nur die Stirnflächen der drei Haltezylinder aus Glas, aber kein die Messung verfälschendes Metallteil. In der Figur ist zu erkennen, daß die Referenzebene 2 in der Nähe der Haltezylinder einen Ausschnitt 16 besitzt, durch den ebenfalls dafür gesorgt wird, daß der Meßbereich frei von Metallteilen ist. So lassen sich Diffraktionsinterferenzen mit dem Aluminiumträger nur als schwaches Signal auf der Seite sehr großer Winkel im Diffraktionsprotokoll nachweisen.

Aufgrund der Dreipunkthalterung der Materialprobe zwischen den drei Haltezylindern können auch Materialproben erfaßt werden, die nicht wie dargestellt die Form eines Parallelepipeds haben, sondern z.B. wie Pillen mit einem kreisförmigen Grundriß oder gar unregelmäßig geformt sind. Stets wird durch den Bezug auf die Referenzebene 2 erreicht, daß die zu testende Fläche der Materialprobe in einer reproduzierbaren Sollposition gehalten wird.

Im Rahmen der Erfindung ist es auch möglich, die ortsfesten Haltezylinder anstatt mit Madenschrauben 9 mit anderen Befestigungsmitteln oder mit einem Kleber in den Paßlöchern im Träger 1 zu befestigen. Die Madenschrauben können auch von der Seite, d.h. nicht parallel zur Führungsstange 11, in den Träger eingeschraubt sein. Schließlich könnte im Rahmen der Erfindung auch der Schlitz 10 und damit die Achse der Führungsstange 11 anders ausgerichtet sein, insbesondere senkrecht zur Ebene des Zwischenstücks 4 verlaufen, sofern auch die festen Haltezylinder 6 und 7 entsprechend gedreht werden.

PROBENHALTER FÜR EINE MATERIALPROBE,
INSBESONDERE FÜR RÖNTGEN-DIFFRAKTIONS-
MESSUNGEN

PATENTANSPRÜCHE
=================

1. Probenhalter für eine Materialprobe mit einer ebenen Testfläche und dazu senkrechten Seitenflächen, insbesondere für
Röntgen-Diffraktionsmessungen, dadurch g e k e n n -
z e i c h n e t, daß ein Träger (1) mit im wesentlichen
Z-förmigem Querschnitt, d.h. mit zwei zueinander parallelen
und durch ein dazu i.W. senkrecht verlaufendes Zwischenstück (4)
verbundenen Ebenen (2, 3) vorgesehen ist, von denen die erste
Ebene (2) die Referenzebene für die ebene Testfläche der
Materialprobe (5) bildet, während auf der zweiten Ebene (3)
drei Haltezylinder (6-8) für die Materialprobe senkrecht zu
dieser Ebene und zueinander im Dreieck angeordnet sind, daß
zwei dieser Haltezylinder (6, 7) fest montiert sind, während
der dritte (8) in einem Schlitz (10) im Träger verschiebbar
ist, wobei eine Feder (15) diesen Zylinder in die den beiden
ortsfesten Zylindern nächstliegende Stellung zu drücken versucht.

2. Probenhalter nach Anspruch 1, dadurch gekennzeichnet, daß
der dritte Haltezylinder (8) in einer Führungsstange (11) befestigt ist, die in einem parallel zur zweiten Ebene (3) durch
den Träger (1) verlaufenden Kanal gleitend angeordnet ist, und
daß die Feder (15) ebenfalls in diesem Kanal liegt und sich einerseits an der Stirnseite der Stange (11) in der Nähe des Zylinders (8) und andererseits an einer Schraubhülse (13) abstützt, die mit einem Gewinde (14) an der Mündung dieses Kanals zusammenwirkt.

3. Probenhalter nach einem der Ansprüche 1 und 2, dadurch gekennzeichnet, daß die Zylinder (6, 7, 8) aus Glas sind, während der Träger (1), die Führungsstange (11), die Feder (15) und die Schraubhülse (13) aus Metall sind.

0185351